# EUROPEAN PATENT SPECIFICATION

(11) **EP 0 823 016 B1**
(45) Date of publication and mention of the grant of the patent: **12.07.2000**
(21) Application number: 96909995.1
(22) Date of filing: 11.04.1996
(51) Int. Cl.: F01N 3/02, F01N 5/02, F01N 1/08

(54) **A COMBINED HEAT EXCHANGER AND SILENCER APPARATUS**
KOMBINIERTER WÄRMETAUSCHER UND SCHALLDÄMPFER
ECHANGEUR DE CHALEUR COMBINE A UN DISPOSITIF AMORTISSEUR DE BRUIT

(30) Priority: 11.04.1995 DK 43695; 28.11.1995 DK 134495
(43) Date of publication of application: 11.02.1998
(73) Proprietor: Silentor A/S, 2640 Hedehusene (DK)
(72) Inventor: LUND, Agner, DK-6920 Videbaek (DK); FREDERIKSEN, Svend, S-222 27 Lund (SE)
(74) Representative: Vingtoft, Knud Erik
(86) International application number: DK9600172
(87) International publication number: WO9632572

(56) References cited:
- DE-A- 3 039 742
- DE-A- 3 317 018
- FR-A- 2 492 455
- FR-A- 2 527 684
- GB-A- 19 156 972
- US-A- 4 450 932
- PATENT ABSTRACTS OF JAPAN vol. 8, no. 170 (M-315), 7 August 1984 & JP,A,59 065513 (YANMAR), 13 April 1984,
- PATENT ABSTRACTS OF JAPAN vol. 94, no. 010 & JP,A,06 288576 (KIMURA KOHKI CO LTD), 11 October 1994,

## Description

The present invention relates to a combined heat exchanger and silencer apparatus for transferring heat from a first flow of hot combustion gas exhausted from a combustion engine to a second flow of colder heat receiving medium.

Large stationary combustion engines, such as diesel engines or gas engines, are used in power plants, factories, and other power stations on land for driving electricity generators and other machines and on board of drilling rigs and ships for driving electricity generators and/or propellers or other propulsion means. Such combustion engines are exhausting combustion gas at a rather high temperature and at a rather high noise level. Therefore, it is necessary to let the exhaust gas or combustion gas from the combustion engine pass a silencer or another sound damping unit.

Because the temperature of the exhaust gas is rather high it may be desirable to regain some of the heat energy therefrom. It is known to let the combustion gas exhausted from a combustion engine flow through a silencer unit to reduce the noise level and thereafter through one or two heat exchanger units which are connected in series with the silencer unit. The outer surfaces of the silencer unit and the heat exchanger unit or units are preferably heat insulated to reduce the loss of heat, and in the heat exchanger unit or units the heat energy of the combustion gas is used for heating a flow of water or another heat receiving medium.

The function of the silencer unit as well as the function of the heat exchanger unit or units necessitates a certain pressure drop across each of these units. This means that the combustion gas from the engine must be exhausted against a relatively high counter pressure, whereby the efficiency of the combustion engine is undesirably reduced.

FR-A-2,492,455 discloses a water cooled spark catching apparatus having a central large diameter tube, which contains spark catching plates. The central tube is surrounded by an arrangement of mutually parallel small diameter tubes connected in parallel by plenum chambers, which are positioned at opposite ends of the tubes. Combustion gas is passed through the parallel tubes where it is cooled and may thereafter via one of the plenum chambers flow into the central tube with the spark catching plates before the gas leaves the apparatus.

DE-A-3,039,742 discloses in Fig. 3 a conventional silencer provided with a surrounding cooling jacket. Thus, the silencer mainly consists of a gas inlet tube, an inner silencer body surrounding the inlet tube, and a single annular gas outlet passage surrounding the inner silencer body. In this known silencer combustion gas is flowing through three coaxial flow passage sections connected in series. The cooling jacket is in direct heat transferring contact with the outer annular gas flow passage section, only.

US-A-4,450,932 discloses a heat recovery muffler comprising a centrally arranged muffler of the coventional type with gas flow reversal. The outlet of his muffler opens into a plenum chamber, which interconnects the inlet ends of a plurality of coextending gas flow tubes being surrounded by cooling water. The outlet ends of the gas flow passages open into an additional common plenum chamber from which the cooled gas is discharged into the atmosphere via a spark arrestor for separating carbon particles from the gas flow.

The present invention provides a combined heat exchanger and silencer apparatus of the above type which requires substantially less space and which is more efficient than the known apparatuses of this type.

Thus, the present invention provides a combined heat exchanger and silencer apparatus for transferring heat from a first flow of hot combustion gas exhausted from a combustion engine to a second flow of a colder heat receiving medium, means defining a first passage for said flow of combustion gas, said first passage including a plurality of substantially coextending passage sections defining an inlet passage and an outlet passage, respectively, means defining a second passage for said flow of heat receiving medium, the second passage being separated from and being in heat conductive contact with each of said first passage sections, and means defining plenum chambers at opposite ends of said plurality of passage sections whereby adjacent ends thereof are interconnected so as to connect the inlet passage and outlet passage in series, at least one first passage section extending between said opposite plenum chambers without flow reversal and containing silencer means so as to function as a silencer, said silencer means comprising either silencer chambers, which are defined within said at least one first passage section and connected in series by connecting passages each having a cross-sectional area being substantially smaller than that of the silencer chambers and a length substantially exceeding the maximum cross-sectional dimension of the respective connecting passage and/or a heat resistant sound damping porous material arranged within two or more of said first passage sections.

The apparatus according to the invention is of a very efficient, compact and maintenance friendly structure in which the pressure drop of the combustion gas flowing therethrough is relatively low.

The silencer means may comprise heat resistant material having sound damping characteristics, such as porous mineral bodies, perforated metal plates, nettings, mineral or metal fibers or threads, for example in form of mineral wool or metal wool, such as steel wool, and the like. The sound damping material may cover the total cross-sectional area of the first passage so that the hot combustion gas has to find its way through the pores or openings or the porous material. In such case, however, the flow resistance may be unacceptably high. Therefore, the silencer means or the sound damping porous material preferably covers only part of the cross-sectional area of the first passage. The effect of the sound damping material may be improved when such material defines a tortuous, unobstructed flow path within the respective passage section. As an example, the sound damping material may be in the form of annular members covering inner wall parts of the respective passage section and solid bodies arranged centrally within the passage section, the annular members and the solid bodies being alternatingly and consecutively arranged in the longitudinal direction of the passage section. Alternatively, the sound damping material may be in the form of an elongated, twisted band extending longitudinally within the respective passage section.

The sound damping material may be arranged within the respective passage section along substantially the full length thereof. Alternatively, the passage section along which the hot combustion gas is flowing, may comprise inlet and outlet sections, the inlet section or sections in which the silencer means are arranged being connected in series with the outlet sections.

The first passage may comprise a plurality of inlet sections, and the downstream ends of those inlet sections may open into a common silencer tube or chamber containing silencer means. Thus, the cross-sectional area of the silencer tube substantially exceeds that of each inlet section or tube. This means, that the inlet section of the first passage through which the combustion gas is flowing may comprise only one or a few such silencer tubes or ducts in which the silencer means or sound damping material is arranged. Thus, the inlet sections of the first passage may comprise only be formed by a single or a few mufflers or exhaust silencers.

Alternatively, each of the inlet sections of the first passage may have substantially the same cross-sectional area as each of the outlet sections, and silencer means may be arranged within one, more, or all of the inlet and outlet sections.

The inlet and the outlet sections may extend in the same direction so that the outlet sections form a continuation of the inlet section or sections, and each inlet section and preferably also each outlet section may be surrounded by a jacket containing water or another heat receiving medium. In a preferred embodiment, however the outlet sections are arranged around the inlet section or sections of the first passage in coextending relationship therewith. Thus, the inlet section or sections of the first passage in which the combustion gas has its highest temperature is arranged centrally in the apparatus while the plurality of outlet sections in which the temperature of the combustion gas is lower, are arranged peripherally around the inlet section or sections. Thus, the combined silencer and heat exchanger apparatus may form a single unit in which the temperature at the peripheral outer surface may be kept at a lower level than the temperature within the central part of the unit.

The downstream end of the inlet section or sections may be interconnected with the upstream ends of the plurality of outlet sections in any suitable manner. In the preferred embodiment, however, the downstream end or ends of the inlet section or sections is/are interconnected with the upstream ends of the outlet sections via a plenum chamber.

In the heat apparatus according to the invention the outlet sections are positioned in an annular arrangement around the centrally arranged inlet section or sections of the first passage. This annular arrangement may define any suitable cross-sectional shape, such as polygonal, elliptical, square or rectangular. In a presently preferred embodiment, the outlet sections are positioned in a substantially circular or circularly cylindrical arrangement around the inlet section or sections of the first passage, whereby the apparatus may have a substantially cylindrical outer housing.

The outlet sections may be positioned not only in a single annular arrangement, but in two or more annular, radially spaced arrangements, the down-stream ends of the tubes of one arrangement communicating with the upstream ends of the sections of an adjacent arrangement, so that the combustion gas may flow through the radially spaced arrangement in at least two oppositely directed longitudinal directions. Also in this case each of the annular arrangements may define any suitable cross-sectional shape, such as circular, elliptical, polygonal, rectangular, or square, and the annular arrangements may be substantially coaxially arranged.

The second flow passage through which the heat receiving medium is flowing, may be of any type securing heat transfer between the media flowing in the first and second flow passages, respectively. The second flow passage may, for example, comprise the space defined between inlet sections of the first passage. This means, that these inlet sections are surrounded by flowing heat receiving medium to which heat energy is transferred from the combustion gas flowing through the first passage.

Alternatively or additionally, the second flow passage may comprise a space defined between the outer peripheral surfaces of the outlet sections. Thus, heat energy may also be transferred to the heat receiving medium from the already somewhat cooled combustion gas flowing through the outlet sections.

When the tubes or ducts forming the outlet sections are positioned in two or more annular, radially spaced arrangements the second flow passage may partly be defined by at least one annular partition wall extending between such adjacent annular tube arrangements. The heat receiving medium may then be forced to flow substantially in the longitudinal direction of the tubes or ducts forming the inlet sections of each annular arrangement. It is also possible to divide the second flow passage into low and high temperature stages, if desired. Similarly, the space defined between the tubes or ducts forming the inlet sections may be separated from the part of the second flow passage defined between the tubes or ducts forming outlet sections so as to form a high temperature second flow passage part.

Preferably, the heat receiving medium is water, but it may be any other suitable liquid or gas, such as air or steam. The heated heat receiving medium issuing from the outlet of the second passage may, for example, be utilized for heating purposes, such as in a central heating system.

The inlets and outlets of the first and second flow passages, respectively, are preferably arranged so as to obtain counterflow in said first and second flow passages, whereby heat transfer from the combustion gas to the heat receiving medium may be optimized.

The silencer means or sound damping material arranged within the first flow passage preferably forms part of one or more silencer units replaceably mounted within in the first flow passage sections. The silencer unit or units may then be replaced at suitable time intervals, when solid or liquid particles, such as soot particles or droplets of oil have been deposited in the silencer unit to such an extent that the efficiency of the silencer has been substantially reduced and/or an explosion risk exists.

As an example the silencer unit may be a cylindrical unit which is replaceably arranged within a first passage section formed by a cylindrical tube having an inner diameter slightly exceeding the outer diameter of the silencer unit. The silencer means may be arranged in at least two and preferably three, four or even more of said first passage sections functioning as silencers and such silencers may then be mutually connected in parallel by opposite plenum chambers. Such first passage sections provided with silencer means and connected in parallel may further be connected in series with further first heat exchanging and/or silencing passage sections. These further first heat exchanging and/or silencing passage sections may form one or more pluralities, and the passage sections in each plurality may be mutually connected in parallel.

When the combustion gas is flowing from the plenum chambers into first passage sections having a substantially smaller cross-sectional area and from first passage sections into plenum chambers a sound damping effect, especially in the lower frequency range, will occur because of sound reflections. A supplementing sound damping or silencing effect, especially in the medium and high frequency ranges, is obtained when the combustion gas passes the silencer means arranged within the first passage sections. In order to further improve the sound damping effect obtained sound reflecting silencer chambers may be defined within at least one and preferably in all of the silencers, and these chambers may be connected in series by connecting passages each having a cross-sectional area which is substantially smaller than that of the chambers and a length substantially exceeding (preferably being a multiple of) the maximum cross-sectional dimension of the respective connecting passage.

In a preferred embodiment the upstream and/or downstream end of at least one of the first passage sections functioning as a silencer is connected to an adjacent plenum chamber via a passage having a cross-sectional area which is substantially smaller than that of the silencer, and a length substantially exceeding the maximum cross-sectional dimension of the connecting passage.

It has been found that heat exchanging apparatuses used in connection with combustion gas from internal combustion engines is quite often exposed to a substantial fouling, such as deposition of soot, condensate etc., even when the fuel used in the combustion engine is of a non-polluting type, such as natural gas. Of course water condensate will deposit on surfaces being cooled to a temperature which is lower than the dew point of water vapour present in the combustion gas.

However, the condensate of other substances, such as gaseous hydrocarbons originating from non-combusted, evaporated lubricating oil from the engine cylinders, may deposit on surfaces having a temperature being substantially above the dew point of water vapour.

The fouling effect may be substantially reduced by using first passage sections in the form of substantially straight tubes with smooth inner surfaces. Furthermore, such tubes may be cleaned in a relatively easy manner at certain time intervals.

In order to prevent or reduce fouling of sound absorbing material or other silencer means arranged within the first passage sections, such silencer means or sound absorbing material is preferably arranged in the first passage sections where the temperature of the combustion is still high. If the sound damping material is arranged within the first passage sections where the combustion gas has been substantially cooled fouling will be substantially increased and it will often be necessary to make the silencer means or sound damping material from stainless steel.

The apparatus according to the invention may comprise means for branching off part of the flow of hot combustion gas and for conducting the hot gas to inner surfaces of any of the silencers so as to heat such surfaces and thereby reduce fouling, such as deposition of soot and other foreign matter thereon.

It may in some situations be desirable to reduce the recovery of heat energy from the hot combustion gases or engine exhaust gases. It is known to provide heat exchangers with a bypass duct which allows operation with a reduced or eliminated heat transfer to the heat receiving fluid. However, in case the heat exchanging apparatus has been designed for noise reduction in addition to heat recovery, such bypass function may necessitate the installation of supplementary silencing means, e.g. a separate silencer in the bypass duct. This may be a problem in the case of installations where limited space is available.

An additional problem with such arrangements is that damper valves, which are used for controlling the gas flow through the heat exchanger passage sections and through the bypass duct, respectively, create flow generated noise which may further reduce the acoustic performance of the system. In particular, this is the case in the event of partial bypass operation, when the damper valves are partially opened and thereby create rather big pressure drops in the gas flows passing the valves.

The apparatus according to the invention may be provided with bypassing means in a manner so as to maintain noise reduction at least to a substantial degree without requiring installation of supplementary silencers.

Thus, the apparatus according to the present invention may further comprise means for causing at least part of said first flow of hot combustion gas to bypass at least some of said first passage sections not containing silencer means. As an example, the bypassing means may comprise an external bypass duct interconnecting the gas inlet and an opposite plenum chamber forming the inlet of one or more first passage sections containing silencer means. Alternatively, the bypass means may comprise one or more internal bypass ducts interconnecting said opposite plenum chambers, each of said ducts having a maximum cross-sectional dimension which is substantial smaller than the length of the duct. Such bypass duct interconnecting opposite plenum chambers causes in itself a substantial reduction of low frequency noise, and a further reduction is obtained when the hot combustion gas passes the first passage sections containing silencing means or being in the form of mufflers.

The cross-sectional area of each bypass duct may at the downstream end thereof exceed the cross-sectional area of the upstream end so as to cause a pressure recovery diffuser effect in said duct. The bypass duct or ducts may, for example, have a helical or any other shape. In the preferred embodiment, however, the bypass duct or ducts are substantially rectilinear and extend mutually parallel with at least one plurality of first heat exchanging passage sections.

A central plenum chamber and an annular plenum chamber surrounding the central plenum chamber may be defined at one end of the first passage sections. In such case the bypass means may comprise at least one bypass passage extending peripherally around the central plenum chamber and interconnecting said plenum chambers to allow hot combustion gas flowing into one of the plenum chambers to bypass at least some of the first passage sections. As an example, the upstream end of the inlet section or sections of the first passage may communicate with an adjacent central plenum chamber while the upstream end of at least one outlet section of the first passage containing silencer means may communicate with an annular plenum chamber arranged around the central plenum chamber. In this case hot combustion gas flowing into the central plenum chamber may bypass the inlet section or sections of the first passage via the peripherally extending bypass passage or passages.

The bypass means may further comprise damper valve means for controlling the gas flow through the bypass ducts or passages. Because the bypass ducts or passages are relatively long the noise caused by the gas flow past a partly closed damper valve may be reduced. Such damper valve generated noise may be further reduced by using two or more bypass ducts provided with independently operateable damper valves. The heat energy recovery of the apparatus may then be controlled by operating one or more of the damper valve means, which may be positioned only in their fully opened or their fully closed positions, but not in a partly opened position.

Each of the bypass ducts or passages may have a relatively large, unobstructed cross-sectional area compared to the cross-sectional area of the first passage sections. However, in order to obtain an improved silencing effect, silencing means may be arranged within one or more of the bypass ducts or passages.

The invention will now be further described with reference to the drawings diagrammatically illustrating various embodiments of the apparatus according to the invention, and wherein
Figs. 1-4 are longitudinal sectional views of four different embodiments of the combined heat exchanger and silencer apparatus according to the invention,
Figs. 5 and 6 are longitudinal sectional views of different embodiments of tubes or ducts containing sound damping material, shown in an enlarged scale,
Fig. 7 is a longitudinal sectional view of a fifth embodiment of the heat exchanger and silencer apparatus according to the invention,
Fig. 8 is a longitudinal sectional view of a sixth embodiment of the apparatus according to the invention,
Fig. 9 is a cross-sectional view in a slightly enlarged scale along the line A-A in Fig. 8,
Fig. 10 is a longitudinal sectional view of a seventh embodiment of the apparatus according to the invention,
Fig. 11 is a cross-sectional view along the line B-B in Fig. 10,
Fig. 12 is longitudinal sectional view of an eighth embodiment of the apparatus according to the invention along the line C-C in Fig. 13, and
Fig. 13 is a cross-sectional view along the line D-D in Fig. 12.

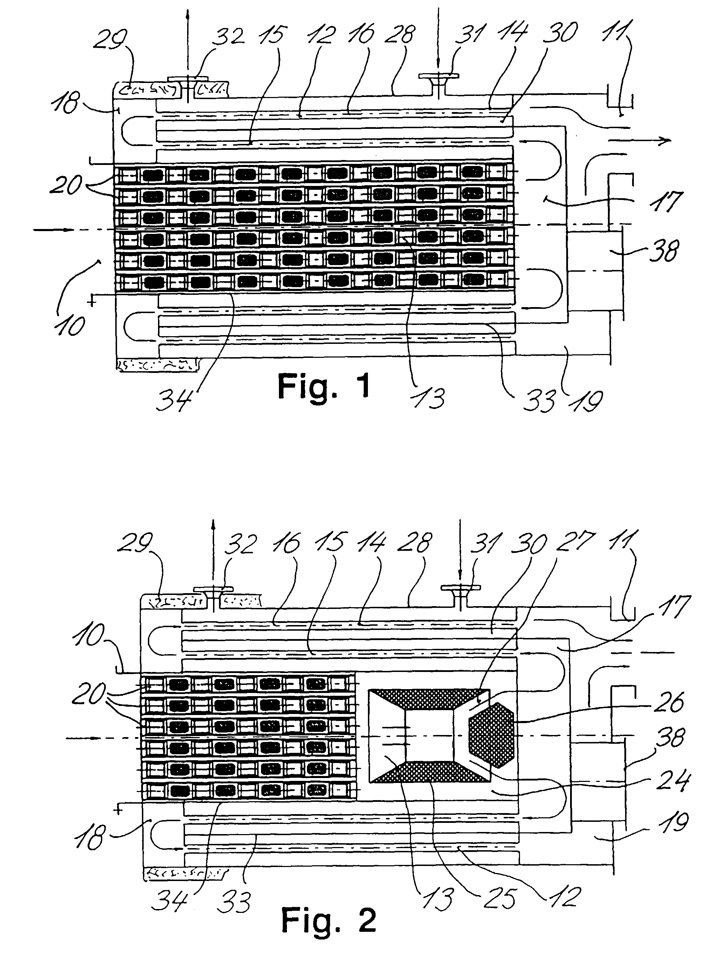

Figs. 1-4 and 7 illustrate various embodiments of combined exhaust silencers or mufflers and heat exchanger apparatuses or devices for use in connection with large diesel engines, gas engines, or other combustion engines. Each of the apparatuses comprises a combustion gas inlet or inlet chamber 10 and a combustion gas outlet 11 which are interconnected by a combustion gas passage 12. The combustion gas passage 12 comprises a central inlet section 13 and an outlet section 14 arranged peripherally around the inlet section 13.

The peripheral outlet section 14 comprises inner an outer arrangements of tubes or ducts 15 and 16, respectively. The axis of these tube arrangements 15 and 16 are positioned on a pair of radially spaced, coaxial, circularly cylindrical surfaces. The downstream end of the inlet section 13 is connected to the upstream ends of the inner tubes 15 via a plenum chamber 17, and the downstream ends of the inner tubes 15 communicating with the upstream ends of the outer tubes 16 via an annular plenum chamber 18. The downstream ends of the outer tubes 16 open into a gas outlet chamber 19 communicating with the combustion gas outlet 11.

In the embodiment shown in Figs. 1-4 the central inlet section 13 for combustion gas comprises a bundle of coextending, radially closely spaced silencer tubes 20, the opposite free ends of which communicate with the combustion gas inlet 10 and the plenum chamber 17, respectively. Each of these silencer tubes 20 contains bodies of a heat resistant, sound damping material comprising for example mineral wool, perforated metal plates, nettings, steel wool, and the like.

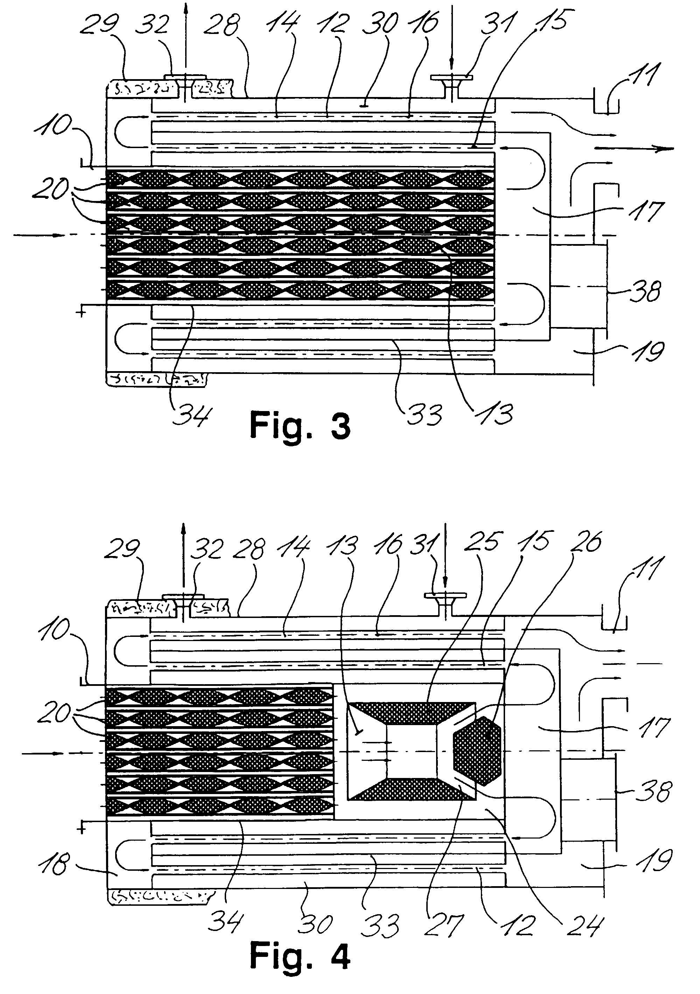

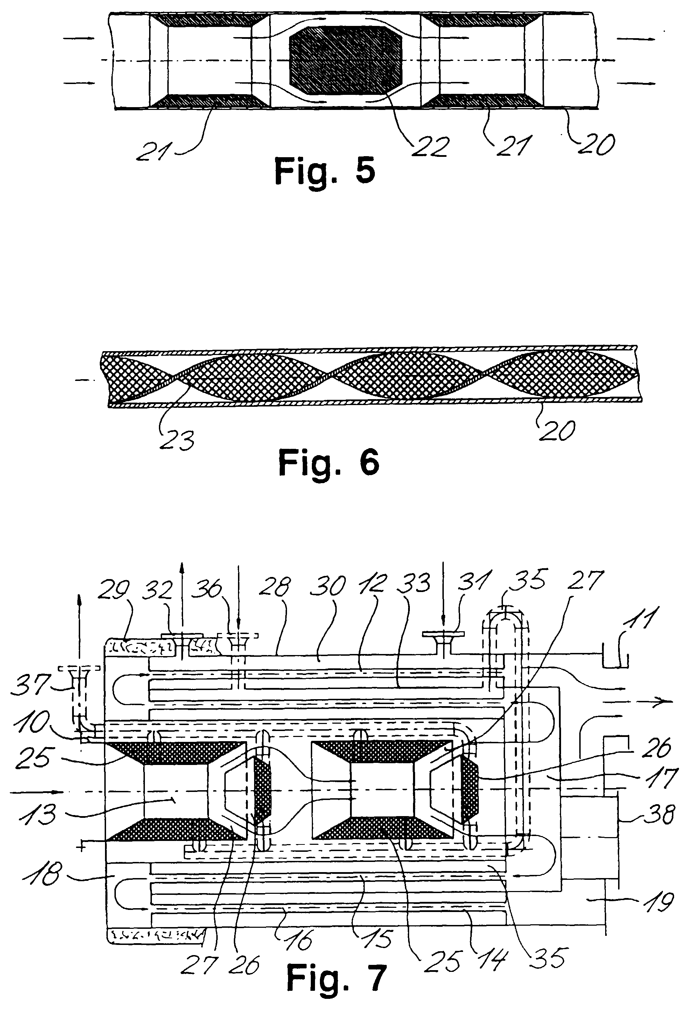

In the embodiments shown in Figs. 1 and 2 the silencer tubes 20 are of the type illustrated in Fig. 5. These tubes contains longitudinally spaced sleeve-like bodies 21 engaging with the inner wall of the tube 20 and centrally arranged, substantially cylindrical bodies 22 so as to define a tortuous path for the combustion gas flowing therethrough as indicated by arrows. The bodies 21 and 22 may have bevelled edges as shown in Fig. 5.

The silencer tubes 20 arranged in the embodiments shown in Figs. 3 and 4 are of the type illustrated in Fig. 6. These silencer tubes 20 contain a longitudinally extending, twisted band 23 of a sound damping material. As an example, the band 23 may be made from mineral wool or steel wool having a covering of netting or of perforated metal plate.

In the embodiments shown in Figs. 1 and 3 the silencer tubes 20 extend in the full length of the central inlet section 13. However, in the embodiments shown in Figs. 2 and 4 the silencer tubes 20 extend from the combustion gas inlet 10 only along part of the full length of the central inlet section 13 so as to define a silencer chamber 24 between the inner end of the silencer tubes 20 and the plenum chamber 17. The silencer chamber 24 contains a centrally arranged, sleeve-shaped silencer body 25 and a centrally arranged, solid silencer body 26 arranged partly within the downstream end of the inner bore of the silencer body so as to define an annular, conically diverging passage 27 between the bodies 25 and 26, which are made from a sound damping material.

In the embodiment shown in Fig. 7 the central inlet section 13 does not contain silencer tubes 20. Instead two pairs of silencer bodies each comprising a sleeve-shaped silencer body 25 and a solid silencer body 26 are arranged in the inlet section 13 in axially spaced relationship.

The heat exchanger devices shown in the drawings comprise an outer housing 28 with a peripheral, cylindrical wall, and the housing may be covered by an outer layer of a suitable heat insulating material 29. A flow passage 30 for water or another heat receiving liquid, such as oil, is defined in the spaces between the tubes or ducts 15 and 16 and between the silencer tubes 20 through which the combustion gas is flowing. The heat receiving liquid may flow into the flow passage 30 via a liquid inlet 31 in a relatively cold condition, and heated water or liquid may flow out from the flow passage 30 via a liquid outlet 32. The liquid or water jacket thus formed around the tubes or ducts through which the combustion gas is flowing may comprise suitable guide plates for directing the flow of heat receiving liquid along the tubes or ducts carrying the combustion gas in a counter-current relationship. Thus, a cylindrical partition wall 33 may be arranged between the inner and outer arrangements of the tubes of ducts 15 and 16. Similarly in the embodiments shown in figs. 1-4 a cylindrical partition wall 34 may be arranged between the inner tubes or ducts 15 and the centrally arranged silencer tubes 20. The partition walls 33 and 34 are provided with such openings or slots (not shown) that a heat receiving medium flowing from the inlet 31, through the flow passage 30 and out from the liquid outlet 32 is substantially in counter flow with the combustion gas flowing through the combustion gas passage 12.

The embodiment shown in Fig. 7 comprises two circuits or passages for heat receiving medium. In addition to an outer flow passage 30 surrounding only an outer arrangement of tubes or ducts 16 the heat exchanger device shown in Fig. 7 comprises a further high temperature circuit or passage 35 surrounding the inner arrangement of tubes or ducts 15 and comprising tubes or conduits extending adjacent to and around the silencer bodies 25 and 26. The high temperature passage 35 has an inlet 36 and an outlet 37.

Combustion gas from a combustion engine is supplied to the combustion gas inlet 10. When the gas is passing the central inlet section 13 the noise is substantially reduced by the sound damping material arranged in the inlet section. At the same time heat energy is transferred from the combustion gas to the heat receiving liquid flowing around the inlet section or around the silencer tubes 20 arranged therein. When the combustion gas is passing through tubes or ducts 15 and 16 the gas is further cooled by the relatively cold heat recei-ving liquid fed into the liquid inlet 31. At the same time hot liquid or water is discharged from the liquid outlet 32. The hot liquid may be supplied to a central heating system or another similar system, and return liquid may be supplied to the liquid inlet 31. Relatively cold combustion gas is exhausted through the combustion gas outlet 11 without any substantial noise.

In the embodiment shown in Fig. 7 relatively cold heat receiving liquid or water may be fed into the liquid inlet 31 and preheated liquid may be withdrawn from the liquid outlet 32. The preheated liquid withdrawn from the liquid outlet 32 may be further heated in any other system or it may be transferred directly to the high temperature inlet 36. In the latter case the liquid is further heated in the high temperature passage, and high temperature liquid or steam may be withdrawn from the outlet 37. Relatively cold combustion gas may without any substantial noise be exhausted through the gas outlet 11. A manhole 38 may be used for inspection and/or repair.

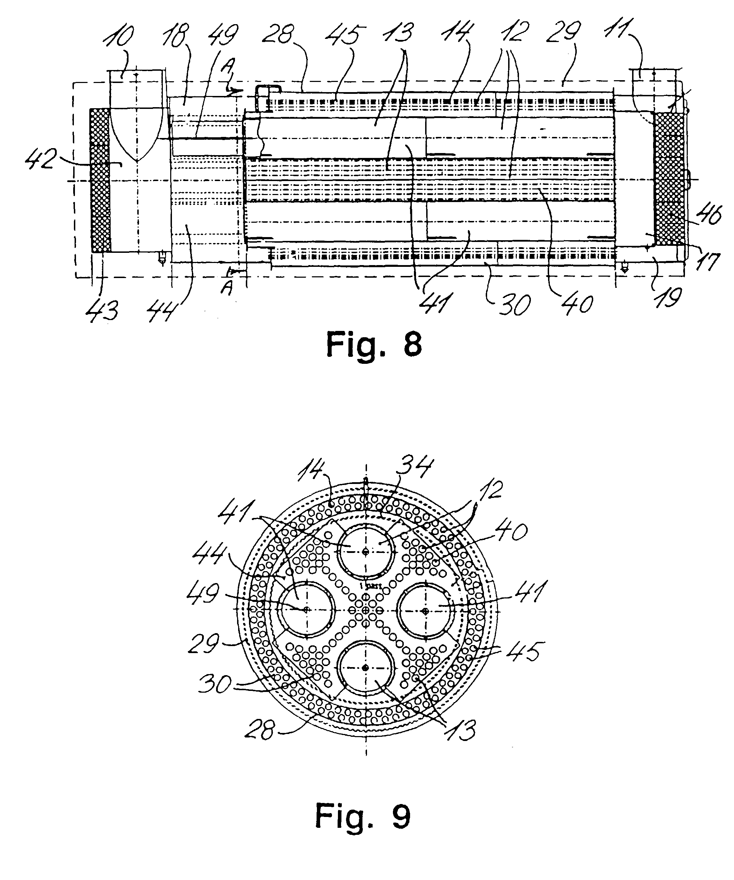

In the embodiment shown in Figs. 8 and 9 the inlet section 13 of the gas passage 12 comprises a plurality of straight tubes 40 in a central arrangement having a cross-sectional shape similar to a Maltese cross, vide Fig. 9. The inlet section 13 further comprises a number (for example four) of large diameter silencer tubes or mufflers 41 which are arranged symmetrically between the arms of the Maltese cross as shown in Fig. 9. The upstream ends of the silencer tubes 41 are connected to the downstream ends of the tubes 40 via the plenum chamber 17, and the upstream ends of the tubes 40 are connected to the gas inlet 10 via an inlet chamber 42 containing sound damping material 43 and via a plenum chamber 44 having a cross-sectional shape corresponding to the cross-sectional shape of the Maltese cross-like arrangement of the tubes 40. The downstream ends of the silencers 41 are communicating with the upstream ends of annular arrangements of tubes 45, which form the outlet section 14, via the annular plenum chamber 18. The plenum chamber 17 interconnecting the tubes 40 and the silencers 41 may also contain sound damping material 46.

Water or another heat receiving medium is contained in the space defined between the tubes 40, the silencers 41, and the tubes 45 and may be supplied to and removed from this space via liquid inlet and outlet, not shown. A cylindrical partition wall 34 and other types of guide plates may be positioned between the tubes 45 on one hand and the silencers 41 and the tubes 40 on the other hand so as to substantially obtain counter current flow between the combustion gas and the heat receiving medium.

Each of the silencer tubes 41 may define a number of silencer chambers which are interconnected by annular connecting passages. At the downstream end of each silencer tube the combustion gas may flow from the tube into the annular turning chamber or plenum chamber 18 in a substantially tangential direction. From the plenum chamber 18 the combustion gas may flow through the tubes 45 of the outlet section 14 to the gas outlet 11 via the annular plenum chamber 19.

The silencer tubes 41 may be straight, large diameter tubes containing removable silencer units so that the annular connecting passages between the silencer chambers may be defined between the outer walls of the units and the inner walls of the large diameter tubes. The silencer unit may, for example, be releasably mounted within the silencer tubes by means of nuts or other fastening means. By removing and end wall of the outer housing 28, for example the end wall at the right hand side in Fig. 8, the silencer units may be removed for repair or replacement and the tubes 40 and 45 of the inlet and outlet sections 13 and 14 may be cleaned.

The use of more silencer tubes 41 rather than a single large diameter centrally arranged silencer has the advantage that the wall thickness of the silencer tube may be substantially reduced and still resist the pressure difference between the heat receiving medium surrounding the tube and the combustion gas flowing through the inner of the tube.

The gas inlet chamber 42 may be interconnected with the oppositely arranged plenum chamber 17 via a small central passage 49 defined in each of the silencer tubes 41. Thus, small amounts of hot combustion gas may flow from the gas inlet chamber 42 directly to plenum chamber 17 via the central passages 49, whereby the silencer units may be heated so as to reduce deposition of soot, condensed vapour, etc.

In the apparatus according the invention the combustion gas is flowing along a gas flow passage having a plurality of sound reflecting sudden changes in cross-sectional area. Such sound reflecting sudden changes take place between the tube ends and adjacent inlet and plenum chambers, between silencer chambers and connecting passages, etc. When the combustion gas is flowing through the heat exchanger apparatus the directional flow is changing several times about 180°. However, the change in flow direction takes place in the plenum chambers at a relatively low flow rate and not in the interconnecting flow passages whereby the pressure drop in the gas flow caused by such changes in direction is minimized.

By arranging the silencer means in the upstream end of the gas flow passage as shown in Figs. 1-4 and 7 the silencer means or sound damping material obtains a relatively high temperature whereby deposition of soot and condensation of vaporized materials is counteracted. However, a high temperature of the silencers tends to increase the pressure drop across the silencers. The embodiment shown in Figs. 8 and 9 in which the silencer tubes 41 are inserted after the inlet tubes 40 constitutes a compromise between the above two contradictory considerations.

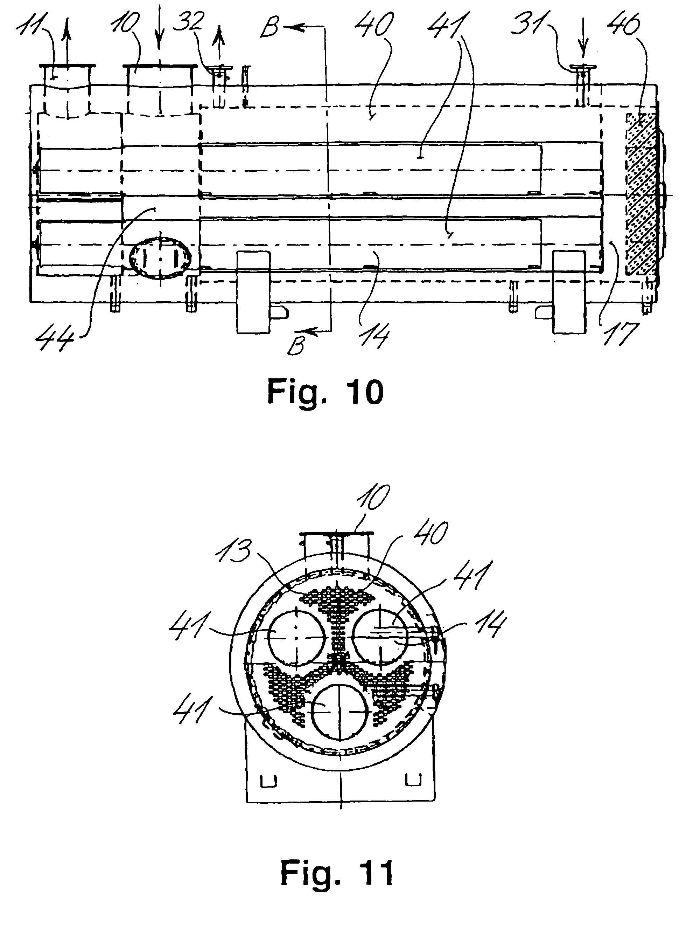

In the embodiment illustrated in Figs. 10 and 11 the inlet section 13 of the combustion gas passage 12 is formed by an arrangement of a plurality of parallel straight tubes 40 which are communicating with opposite plenum chambers 44 and 17. The outlet section 14 of the combustion gas passage 12 is formed by a plurality, for example three, silencer tubes 41 which extend between and is communicating with the plenum chamber 17 and the combustion gas outlet 11, respectively. Thus, hot combustion gas is supplied to the gas inlet 10 and cooled combustion gas is discharged through the gas outlet 11, while heat receiving liquid is supplied to the liquid inlet 31 and discharged from the liquid outlet 32. In other respects, the apparatus shown in Figs. 10 and 11 may be operated as explained in connection with the other figures of the drawings.

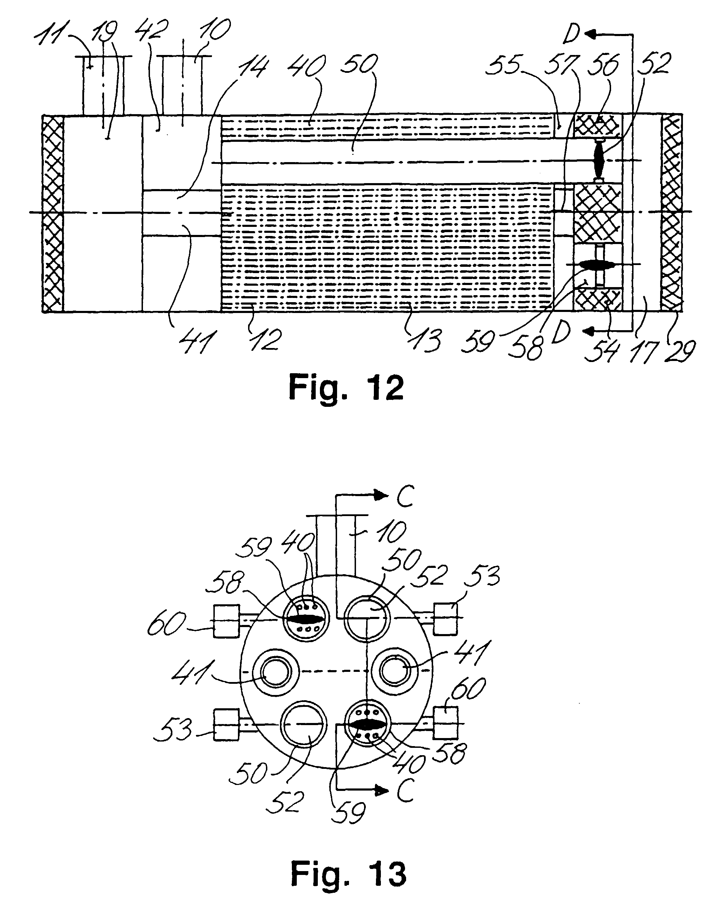

The embodiment shown in Figs. 12 and 13 is similar to that shown in Figs. 10 and 11. However, in the embodiment shown in Figs. 12 and 13 the outlet section 14 of the combustion gas passage 12 comprises only two silencer tubes or mufflers 41. In addition, the apparatus shown in Figs. 12 and 13 comprises a pair of bypass passages or ducts 50 each having a damper valve 52 arranged at its downstream end. The bypass passages or ducts 50 are arranged within and extend, parallel with an arrangement of mutually parallel, straight tubes 40 forming the inlet section 13 of the gas flow passage 12, and parallel with the silencer tubes 41 which form the outlet section 14 of the gas flow passage. The bypass ducts 50 interconnect the gas inlet chamber 42 with the plenum chamber 17. The damper valve 52 in each bypass tube 50 is controlled by an actuator 53. A baffle 54 is positioned at some distance from the outlets of the tubes 40 and constitutes a gas flow collector cavity 55. The baffle 54, which may contain sound absorption means 56, separates the collector cavity 55 from the plenum chamber 17. The collector cavity 55 and the plenum chamber 17 are interconnected by a pair of connecting tubes 58 extending through the baffle 54. Each connecting tubes 58 contains a damper valve 59, which is controlled by an actuator 60. A partition wall 57 divides the collector cavity 55 into a pair of compartments each communicating with one of the connecting tubes 58.

In Figs. 12 and 13 the damper valves 52 are shown in their closed position, while the damper valves 59 are open. With the valves in these positions, the apparatus may be operated in its normal non-bypass mode, in which a maximum amount of heat energy is recovered from the exhaust gases. Exhaust gases or combustion gases being supplied to the gas inlet 10 of the apparatus may flow through the inlet chamber 42 and the straight tubes 40. The combustion gases flow from the outlet ends of the tubes 40 into the collector chamber 55 and then into the plenum chamber 17 via the connecting tubes 58. The gas flow is then divided into two parallel flows through the silencer tubes 41. Finally, these flows merge in the outlet chamber 19, and the total gas flow is discharged from the apparatus via the gas outlet 11.

In the full bypass operational mode the damper valves 59 are closed and the damper valves 52 are in their open position. Thus, the combustion gas or exhaust gas is prevented from passing through the tubes 40 forming the heat exchanging inlet section of the gas flow passage. Instead, the gas is passed from the inlet chamber 42 to the plenum chamber 17 via the bypass ducts 50. From the plenum chamber 17 the combustion gas is passed through the silencer tubes 41 into the outlet chamber 19 and is discharged through the gas outlet 11.

The apparatus shown in Figs. 12 and 13 may retain its acoustic function also in the bypass operational mode because of the abrupt changes in cross-sectional area when the exhaust gases flow from the gas inlet 10 into the inlet chamber 42 and from the inlet chamber 42 into the bypass passages 50. In the non-bypass operational mode an additional sound reflection takes place because of the abrupt change in cross-sectional area when the gas is flowing from the inlet chamber 42 into the tubes 40 having a relatively small total cross-sectional area compared to that of the inlet chamber 42. In the bypass mode this decrease in flow area is substituted by the decrease in flow area when gas is flowing from the inlet chamber into the two bypass tubes 50 having a substantially smaller total cross-sectional area.

Various intermediate operational modes between the extremes of zero and full bypass operation can be obtained by combinations of opening and closing any of the four damper valves 52 and 59 controlling the gas flows through the bypass duct 50 and the connecting tubes 58. As an example, one of the valves 52 may be fully open and the other valve completely closed, while one of the valves 59 may be fully open and the other valve completely closed. In this manner partial bypass operation may be obtained without partially opened valves creating flow-generated noise. In partial bypass operation gas-side pressure drops may be substantially fully utilized for heat transfer and noise reduction and are not waisted in big pressure drops across damper valves. In addition "useful" pressure drops are created along substantial flow distances and not only along rather short distances as across valves. Thereby creation of noisy floweddies may be avoided.

By removing the end wall of the outer housing 29 all of the four damper valves 52 and 59 may be inspected, repaired, or replaced along replacement of silencer units. The apparatus may further be designed in such manner that in Fig. 12 all parts of the baffle 54 may be removed for inspection and service, thereby making the tubes 40 immediately accessible for cleaning.

In the embodiment shown in Figs. 12 and 13 the length of the bypass tubes 50 can not be made smaller than the length of the heat exchanger tubes 40. In some cases this may be a drawback since that length may be greater than what is an acoustically optimal length of a bypass channel.

In alternative bypass embodiments of the invention the length of bypass passages can be determined entirely from what is preferred from acoustical considerations. Such embodiments may comprise peripherally extending bypass passages as described above.

## Claims

1. A combined heat exchanger and silencer apparatus for transferring heat from a first flow of hot combustion gas exhausted from a combustion engine to a second flow of a colder heat receiving medium, said device comprising
means defining a first passage (12) for said flow of combustion gas, said first passage including a plurality of substantially coextending passage sections (15,16,20; 40,41,45) defining an inlet passage (13) and an outlet passage (14), respectively,
means defining a second passage (30) for said flow of heat receiving medium, the second passage being separated from and being in heat conductive contact with each of said first passage sections, and
means defining plenum chambers (10,17; 17, 18) at opposite ends of said plurality of passage sections whereby adjacent ends thereof are interconnected so as to connect the inlet passage (13) and outlet passage (14) in series, at least one first passage section (15,16,20; 40,41,45) extending between said opposite plenum chambers (10,17;17,18) without flow reversal and containing silencer means (21-23,25,26) so as to function as a silencer, said silencer means comprising either silencer chambers, which are defined within said at least one first passage section and connected in series by connecting passages each having a cross-sectional area being substantially smaller than that of the silencer chambers and a length substantially exceeding the maximum cross-sectional dimension of the respective connecting passage (Figs. 5 and 7) and/or a heat resistant sound damping porous material (21-23,25,26) arranged within two or more of said first passage sections.

2. An apparatus according to claim 1, wherein the silencer means (21-23, 25,26) cover only part of the cross-sectional area of the respective passage section (12).

3. An apparatus according to claim 2, wherein the silencer means defines a tortuous, unobstructed flow path within the respective passage section.

4. An apparatus according to any of the claims 1-3, wherein the silencer means are arranged in the inlet section or sections.

5. An apparatus according to any of the claims 1-4, wherein the first passage comprises a plurality of inlet sections.

6. An apparatus according to claim 5, wherein the downstream ends of the inlet sections open into a common silencer tube or chamber containing silencer means.

7. An apparatus according to any of the claims 1-6, wherein the outlet sections are arranged around the inlet section or sections (13) of the first passage (12) in coextending relationship therewith.

8. An apparatus according to claim 7, wherein the outlet sections (14) are positioned in an annular circular arrangement around the centrally arranged inlet section or sections (13) of the first passage (12).

9. An apparatus according to claim 8, wherein the outlet sections (15,16) are positioned in two or more annular, radially spaced arrangements, the downstream ends of the outlet sections (15) of one arrangement communicating with the upstream ends of the outlet sections (16) of that of an adjacent arrangement.

10. An apparatus according to any of the claims 5-9, wherein the second flow passage (30) comprises a space defined between inlet sections (20; 40, 41) of the first passage (12).

11. An apparatus according to any of the claims 1-10, wherein the second flow passage (30) comprises a space defined between the outer peripheral surfaces of the outlet sections (15,16; 45).

12. An apparatus according to any of the claims 9-11, wherein the second flow passage (30) is partly defined by at least one annular partition wall (33) extending between adjacent annular arrangements (15,16) of outlet sections.

13. An apparatus according to any of the claims 1-12, wherein inlets (10,31,36) and outlets (11,32,37) of the first and second flow passages (12,30), respectively, are arranged so as to obtain counterflow in said first and second flow passages.

14. An apparatus according to any of the claims 1-13, wherein the silencer means (21-23, 25, 26) define at least one silencer unit (20) replaceably mounted within one or more of the first flow passage sections (20; 41).

15. An apparatus according to claim 14, wherein the silencer unit is a cylindrical unit which is replaceably arranged within a first passage section (20; 41)formed by a cylindrical tube having an inner diameter slightly exceeding the outer diameter of the silencer unit.

16. An apparatus according to any of the claims 1-15, wherein the silencers (20; 41) are connected in series with further first heat exchanging passage sections (15, 16; 40, 45).

17. An apparatus according to claim 16, wherein the silencers are connected in series with at least one plurality of first passage sections (40, 45), mutually connected in parallel.

18. An apparatus according to any of the claims 1-17, wherein the upstream and/or downstream end of at least one of the first passage sections functioning as a silencer is connected to an adjacent plenum chamber via a passage having a cross-sectional area which is substantially smaller than that of the silencer, and a length substantially exceeding the maximum cross-sectional dimension of the connecting passage.

19. An apparatus according to any of the claims 1-18, further comprising means for branching off part of the flow of hot combustion gas and for conducting the hot gas to inner surfaces of any of the silencers so as to heat such surfaces and thereby reduce fouling.

20. An apparatus according to any of the claims 1-19, further comprising means (50, 52) for causing at least part of said first flow of hot combustion gas to bypass at least some of said first passage sections (15, 16, 20; 40, 41, 45) not containing silencer means (21, 23; 25, 26).

21. An apparatus according to claim 20, wherein the bypass means comprise internal bypass ducts (50) interconnecting said opposite plenum chambers (17, 42), each of said ducts having a maximum cross-sectional dimension which is substantially smaller than the length of the duct.

22. An apparatus according to claim 21, wherein the cross-sectional area of each bypass duct (50) at the downstream end thereof exceeds the cross-sectional area at the upstream end so as to cause a pressure recovering diffuser effect in said duct.

23. An apparatus according to claim 21 or 22, wherein the bypass duct or ducts (50) extend(s) mutually parallel with at least one plurality of first heat exchanging passage sections (40, 41).

24. An apparatus according to any of the claims 20-23 defining at one end thereof a central plenum chamber and an annular plenum chamber extending around the central plenum chamber, said bypass means comprising at least one bypass passage extending peripherally around the central plenum chamber and interconnecting the central and annular plenum chambers, whereby hot combustion gas flowing into the central plenum chamber or into the annular plenum chamber may bypass one or more of the first passage sections.

25. An apparatus according to any of the claims 21-24, wherein the bypass means comprise damper valve means (52) for controlling the gas flow through the bypass ducts or passages (50).

26. An apparatus according to any of the claims 21-25, further comprising silencer means arranged within one or more of the bypass ducts or passages (50).

## Patentansprüche

1. Kombinierte Wärmeaustauscher- und Schalldämpfervorrichtung zum Übertragen von Wärme aus einem ersten Strom heißen Verbrennungsgases, das von einem Verbrennungsmotor abgegeben wird, zu einem zweiten Strom eines kühleren, wärmeaufnehmenden Mediums, wobei die genannte Vorrichtung die folgenden Merkmale aufweist:
Mittel, die einen ersten Kanal (12) für den genannten Strom an Verbrennungsgas bilden, wobei der genannte erste Kanal eine Mehrzahl von sich im wesentlichen gemeinsam erstreckenden Kanalabschnitten (15, 16, 20; 40, 41, 45) aufweist, die einen Einlaßkanal (13) bzw. einen Auslaßkanal (14) festlegen,
Mittel, die einen zweiten Kanal (30) für den genannten Strom an wärmeaufnehmendem Medium bilden, wobei der zweite Kanal von jedem der Abschnitte des ersten Kanals getrennt ist und mit diesen in wärmeleitendem Kontakt steht, und
Mittel, die Sammelkammern (10, 17; 17, 18) an den entgegengesetzten Enden der genannten Mehrzahl von Kanalabschnitten bilden, wodurch deren nebeneinanderliegende Enden miteinander verbunden werden, so daß eine Reihenverbindung von Einlaßkanal (13) und Auslaßkanal (14) hergestellt wird, wobei sich mindestens ein erster Kanalabschnitt (15, 16, 20; 40, 41, 45) ohne Strömungsumkehr zwischen den genannten, entgegengesetzten Sammelkammern (10, 17; 17, 18) erstreckt und Schalldämpfermittel (21-23, 25, 26) enthält, um als Schalldämpfer zu wirken, und wobei die genannten Schalldämpfermittel entweder Schalldämpferkammern aufweisen, die mindestens im genannten, mindestens einen, ersten Kanalabschnitt gebildet sind und durch Verbindungskanäle zu einer Reihe verbunden sind, die jeweils eine Querschnittsfläche haben, die wesentlich kleiner ist als die der Schalldämpferkammern, sowie eine Länge, die die maximale Querschnittsabmessung des jeweiligen Verbindungskanales (Fig. 5 und 7) wesentlich überschreitet, und/oder wärmebeständiges, schalldämpfendes, poröses Material (21-23,25,26), das innerhalb zweier oder mehrerer der genannten ersten Kanalabschnitte angeordnet ist.

2. Vorrichtung nach Anspruch 1, worin die Schalldämpfermittel (21-23, 25, 26) nur einen Teil der Querschnittsfläche des jeweiligen Kanalabschnitts (12) abdecken.

3. Vorrichtung nach Anspruch 2, worin die Schalldämpfermittel einen gewunden, unbehinderten Strömungsweg innerhalb des jeweiligen Kanalabschnitts festlegen.

4. Vorrichtung nach irgendeinem der Ansprüche 1 bis 3, worin die Schalldämpfermittel in dem oder den Einlaßabschnitt(en) angeordnet sind.

5. Vorrichtung nach irgendeinem der Ansprüche 1 bis 4, worin der erste Kanal eine Mehrzahl von Einlaßabschnitten aufweist.

6. Vorrichtung nach Anspruch 5, worin die stromabwärts gelegenen Enden der Einlaßabschnitte sich in ein gemeinsames Schalldämpferrohr oder eine gemeinsame Kammer öffnen, die Schalldämpfermittel enthält.

7. Vorrichtung nach irgendeinem der Ansprüche 1 bis 6, worin die Auslaßabschnitte rund um den oder die Einlaßabschnitt(e) (13) des ersten Kanals (12) in gemeinsamer Erstreckung hiermit angeordnet sind.

8. Vorrichtung nach Anspruch 7, worin die Auslaßabschnitte (14) in einer kreisringförmigen Anordnung rund um den oder die Einlaßabschnitt(e) (13) des ersten Kanals (12) angeordnet sind.

9. Vorrichtung nach Anspruch 8, worin die Auslaßabschnitte (15, 16) in zwei oder mehr ringförmigen, radial beabstandeten Anordnungen angeordnet sind, wobei die stromabwärts gelegenen Enden der Auslaßabschnitte (15) der einen Anordnung mit den stromaufwärtsgelegenen Enden der Auslaßabschnitte (16) der einer benachbarten Anordnung in Verbindung stehen.

10. Vorrichtung nach irgendeinem der Ansprüche 5 bis 9, worin der zweite Strömungskanal (30) einen Raum aufweist, der zwischen den Einlaßabschnitten (20; 40, 41) des ersten Kanals (12) festgelegt ist.

11. Vorrichtung nach irgendeinem der Ansprüche 1 bis 10, worin der zweite Strömungskanal (30) einen Raum aufweist, der zwischen der äußeren Umfangsflächen der Auslaßabschnitte (15, 16; 45) festgelegt ist.

12. Vorrichtung nach irgendeinem der Ansprüche 9 bis 11, worin der zweite Strömungskanal (30) teilweise von mindestens einer ringförmigen Trennwand (33) gebildet ist, die sich zwischen benachbarten, ringförmigen Anordnungen (15, 16) der Auslaßabschnitte erstreckt.

13. Vorrichtung nach irgendeinem der Ansprüche 1 bis 12, worin Einlässe (10, 31, 36) und Auslässe (11, 32, 37) des ersten bzw. zweiten Kanals (12, 30) so angeordnet sind, daß man im ersten und zweiten Kanal einen Gegenstrom erhält.

14. Vorrichtung nach irgendeinem der Ansprüche 1 bis 13, dadurch gekennzeichnet, daß die Schalldämpfermittel (21-23, 25, 26) mindestens eine Schalldämpfereinheit (20) bilden, die austauschbar innerhalb eines oder mehrerer der ersten Strömungskanalabschnitte (20; 41) angebracht ist.

15. Vorrichtung nach Anspruch 14, worin die Schalldämpfereinheit eine zylindrische Einheit ist, die austauschbar innerhalb eines ersten Kanalabschnitts (20; 41) angebracht ist, der von einem zylindrischen Rohr gebildet ist, das einen Innendurchmesser aufweist, der geringfügig den Außendurchmesser der Schalldämpfereinheit überschreitet.

16. Vorrichtung nach irgendeinem der Ansprüche 1 bis 15, worin die Schalldämpfer (20; 41) mit weiteren, ersten, wärmeaustauschenden Kanalabschnitten (15, 16; 40, 45) in Reihe verbunden sind.

17. Vorrichtung nach Anspruch 16, worin die Schalldämpfer mit mindestens einer Mehrzahl der ersten Kanalabschnitte (40, 45) in Reihe verbunden sind, die miteinander parallel verbunden sind.

18. Vorrichtung nach irgendeinem der Ansprüche 1 bis 17, worin das stromaufwärts und/oder stromabwärts gelegene Ende mindestens eines der ersten Kanalabschnitte, die als Schalldämpfer wirken, an eine benachbarte Sammelkammer über einen Kanal angeschlossen ist, der eine Querschnittsfläche aufweist, die wesentlich kleiner ist als die des Schalldämpfers, und eine Länge, die die maximale Querschnittsabmessung des Verbindungskanals wesentlich übersteigt.

19. Vorrichtung nach irgendeinem der Ansprüche 1 bis 18, ferner mit Mitteln zum Abzweigen eines Teils des Stromes heißen Verbrennungsgases und zum Leiten des heißen Gases zu inneren Oberflächen irgendeines der Schalldämpfer, um solche Flächen zu erhitzen und dadurch die Verschmutzung zu verringern.

20. Vorrichtung nach irgendeinem der Ansprüche 1 bis 19, ferner mit Mitteln (50, 52), um mindestens einen Teil des genannten ersten Stromes heißen Verbrennungsgases zu veranlassen, mindestens manche der genannten, ersten Kanalabschnitte (15, 16, 20; 40, 41, 45), die keine Schalldämpfermittel (21, 23; 25, 26) enthalten, zu umgehen.

21. Vorrichtung nach Anspruch 20, worin die Umgehungsmittel innere Umgehungsleitungen (50) aufweisen, die die genannten, entgegengesetzten Sammelkammern (17, 42) miteinander verbinden, wobei jede der genannten Leitungen eine maximale Querschnittsabmessung aufweist, die wesentlich kleiner ist als die Länge der Leitung.

22. Vorrichtung nach Anspruch 21, worin die Querschnittsfläche einer jeden Umgehungsleitung (50) an deren stromabwärtsgelegenem Ende die Querschnittsfläche am stromaufwärtsgelegenen Ende übersteigt, um eine druckrückgewinnende Diffusorwirkung in der genannten Leitung zu veranlassen.

23. Vorrichtung nach Anspruch 21 oder 22, worin die Umgehungsleitung oder -leitungen (50) sich wechselweise parallel zumindestens einer Mehrzahl der ersten, wärmeaustauschenden Kanalabschnitte (40, 41) erstreckt bzw. erstrecken.

24. Vorrichtung nach irgendeinem der Ansprüche 20 bis 23, die an ihrem einen Ende eine mittige Sammelkammer und eine ringförmige Sammelkammer bildet, die sich rund um die mittige Sammelkammer erstreckt, wobei die genannten Umgehungsmittel mindestens einen Umgehungskanal aufweisen, der sich in Umfangsrichtung rund um die mittige Sammelkammer erstreckt und die mittige sowie die ringförmige Sammelkammer miteinander verbindet, wodurch heißes Verbrennungsgas, das in die mittige Sammelkammer oder die ringförmige Sammelkammer einströmt, einen oder mehrere der ersten Kanalabschnitte umgehen kann.

25. Vorrichtung nach irgendeinem der Ansprüche 21 bis 24, worin die Umgehungsmittel Regulierventilmittel (52) aufweisen, um die Gasströmung durch die Umgehungsleitungen oder -kanäle (50) zu steuern.

26. Ventil nach irgendeinem der Ansprüche 21 bis 25, ferner mit Schalldämpfermitteln, die innerhalb einer oder mehrerer der Umgehungsleitungen oder -kanäle (50) angeordnet sind.

## Revendications

1. Echangeur de chaleur et silencieux combinés pour transférer de la chaleur, d'un premier flux de gaz de combustion chaud sortant d'un moteur à combustion interne, à un second flux d'un milieu, plus froid, de réception de la chaleur, ledit dispositif comportant
des moyens définissant un premier passage (12) pour ledit flux de gaz de combustion, ledit premier passage comprenant une pluralité de portions de passage (15, 16, 20 ; 40, 41, 45), substantiellement en coextension, définissant un passage d'entrée (13) et un passage de sortie (14), respectivement
des moyens définissant un second passage (30) pour ledit flux du milieu de réception de la chaleur, le second passage étant séparé d'avec, et étant en contact pour conduction de la chaleur avec, chacune desdites portions du premier passage,
des moyens définissant des chambres sous pression (10, 17 ; 17, 18) aux extrémités opposées de ladite pluralité de portions de passage, ce par quoi leurs extrémités adjacentes sont interconnectées de façon à connecter en série le passage d'entrée (13) et le passage de sortie (14), au moins une portion du premier passage (15, 16, 20 ; 40, 41, 45) s'étendant entre lesdites chambres sous pression opposées (10, 17 ; 17, 18) sans inversion du flux et contenant des moyens formant silencieux (21-23, 25, 26) de façon à fonctionner comme silencieux, lesdits moyens formant silencieux comportant soit des chambres formant silencieux, qui sont définies à l'intérieur d'au moins une première portion du premier passage et sont reliées en série par des passages de connexion dont chacun a une aire de section droite substantiellement inférieure à celle des chambres formant silencieux et une longueur excédent substantiellement la dimension maximale de la section du passage de connexion respectif (figures 5 et 7) et/ou un matériau poreux, amortisseur du bruit, résistant à la chaleur (21-23, 25, 26) disposé à l'intérieur de deux, ou davantage, desdites portions du premier passage.

2. Appareil selon la revendication 1, dans lequel les moyens formant silencieux (21-23, 25, 26) ne couvrent qu'une partie de l'aire de section droite de la portion de passage respective (12).

3. Appareil selon la revendication 2, dans lequel les moyens formant silencieux définissent à l'intérieur de la portion de passage respective un chemin tortueux, sans obstacle pour le flux.

4. Appareil selon l'une des quelconques revendications 1-3, dans lequel les moyens formant silencieux sont disposés dans la portion ou les portions d'entrée.

5. Appareil selon l'une des quelconques revendications 1-4, dans lequel le premier passage comporte une pluralité de portions d'entrée.

6. Appareil selon la revendication 5, dans lequel les extrémités aval des portions d'entrée s'ouvrent dans un tube formant silencieux courant ou dans une chambre comptant des moyens formant silencieux.

7. Appareil selon l'une des quelconques revendications 1-6, dans lequel les portions de sortie sont disposées autour de la portion ou des portions d'entrée (13) du premier passage (12), en co-extension avec elles.

8. Appareil selon la revendication 7, dans lequel les portions de sortie (14) sont positionnées en un groupement circulaire annulaire autour de la portion ou des portions d'entrée (13), disposées au centre, du premier passage (12).

9. Appareil selon la revendication 8, dans lequel les portions de sortie (15, 16) sont positionnées en deux, ou davantage, groupements annulaires, radialement espacés, les extrémités aval des portions de sortie (15) d'un groupement communiquant avec les extrémités amont des portions de sortie (16) d'un groupement adjacent.

10. Appareil selon l'une des quelconques revendications 5-9, dans lequel le second passage du flux (30) comporte un espace défini entre les portions d'entrée (20 ; 40, 41) du premier passage (12).

11. Appareil selon l'une des quelconques revendications 1-10 dans lequel le second passage du flux (30) comporte un espace défini entre les surfaces périphériques extérieures des portions de sortie (15, 16 ; 45).

12. Appareil selon l'une quelconque des revendications 9-11, dans lequel le second passage du flux (30) est partiellement défini par au moins une cloison annulaire (33) s'étendant entre des groupements annulaires adjacents (15, 16) de portions de sortie.

13. Appareil selon l'une quelconque des revendications 1-12, dans lequel les entrées (10, 31, 36) et les sorties (11, 32, 37) des premier et second passages du flux (12, 30), respectivement, sont disposées de façon à obtenir un contre-flux dans lesdits premier et second passage du flux.

14. Appareil selon l'une quelconque des revendications 1-13, dans lequel les moyens formant silencieux (21-23, 25, 26) définissent au moins un sous-ensemble formant silencieux (20) monté, avec possibilité de remplacement, à l'intérieur d'une ou plusieurs portions (20 ; 41) du premier passage du flux.

15. Appareil selon la revendication 14, dans lequel le sous-ensemble formant silencieux est un sous-ensemble cylindrique qui est disposé, avec possibilité de remplacement, à l'intérieur d'une portion (20 ; 41) du premier passage formée par un tube cylindrique de diamètre intérieur dépassant légèrement le diamètre extérieur du sous-ensemble formant silencieux.

16. Appareil selon l'une des quelconques revendications 1-15, dans lequel les silencieux (20 ; 41) sont connectés en série avec d'autres portions (15, 16 ; 40, 45) du premier passage échangeur de chaleur.

17. Appareil selon la revendication 16, dans lequel les silencieux sont connectés en série avec au moins une pluralité de portions (40, 45) du premier passage, mutuellement connectées en parallèle.

18. Appareil selon l'une des quelconques revendications 1-17, dans lequel l'extrémité amont et/ou aval d'au moins l'une des portions du premier passage fonctionnant comme silencieux est connectée à une chambre sous pression adjacente par l'intermédiaire d'un passage dont l'aire de section droite est sensiblement inférieure à celle du silencieux et dont la longueur excède substantiellement la dimension maximale de la section du passage de connexion.

19. Appareil selon l'une des quelconques revendications 1-18,
comportant en outre des moyens pour dériver une partie du flux des gaz de combustion chauds et conduire les gaz chauds sur les surfaces intérieures de l'un quelconque des silencieux de façon à chauffer ces surfaces et à réduire ainsi l'encrassement.

20. Appareil selon l'une quelconque des revendications 1-19, comportant en outre des moyens (50, 52) pour faire en sorte qu'au moins une partie dudit premier flux de gaz de combustion chauds bypasse au moins certaines desdites portions (15, 16, 20 ; 41, 45) du premier passage qui ne contiennent pas de moyens formant silencieux (21, 23 ; 25, 26).

21. Appareil selon la revendication 20, dans lequel les moyens de bypass comportent des conduits de bypass intérieurs (50) interconnectant lesdites chambres sous pression opposées (17, 42) chacun desdits conduits ayant une dimension maximale de la section qui est substantiellement inférieure à la longueur du conduit.

22. Appareil selon la revendication 21, dans lequel l'aire de section droite de chaque conduit de bypass (50), à son extrémité aval, excède l'aire de section droite à l'extrémité amont de façon à obtenir dans ledit conduit un effet diffuseur de rétablissement de la pression.

23. Appareil selon la revendication 21 ou 22, dans lequel le conduit ou les conduits de bypass (50) s'étend (ent) mutuellement parallèlement à au moins une pluralité de portions (40, 41) du premier passage échangeur de chaleur.

24. Appareil selon l'une quelconque des revendications 20-23, définissant à l'une de ses extrémités une chambre centrale sous pression et une chambre annulaire sous-pression s'étendant autour de la chambre centrale sous pression, lesdits moyens formant bypass comportant au moins un passage de bypass s'étendant périphériquement autour de la chambre centrale sous pression et interconnectant les chambres centrale et annulaire sous pression, ce par quoi les gaz de combustion chauds qui s'écoulent dans la chambre centrale sous pression ou dans la chambre annulaire sous pression peuvent bypasser une ou plusieurs des portions du premier passage.

25. Appareil selon l'une des quelconques revendications 21-24, dans lequel des moyens formant bypass comportent des moyens formant registre (52) pour commander le flux de gaz à travers les conduits ou passages de bypass (50).

26. Appareil selon l'une des quelconques revendications 21-25, comportant en outre des moyens formant silencieux disposés à l'intérieur d'un ou plusieurs des conduits ou passages de bypass (50).
